(19) Europäisches Patentamt / European Patent Office / Office européen des brevets

(11) **EP 1 974 962 A2**

(12) **EUROPEAN PATENT APPLICATION**

(43) Date of publication:
**01.10.2008 Bulletin 2008/40**

(51) Int Cl.:
**B60C 23/06** (2006.01)

(21) Application number: **08002281.7**

(22) Date of filing: **07.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.03.2007 JP 2007091970**

(71) Applicant: **SUMITOMO RUBBER INDUSTRIES, LTD.**
**Hyogo-ken (JP)**

(72) Inventor: **Oshiro, Yuji**
**Kobe-shi**
**Hyogo-ken (JP)**

(74) Representative: **Manitz, Finsterwald & Partner GbR**
**Postfach 31 02 20**
**80102 München (DE)**

(54) **Method for alarming a decrease in tire air-pressure and device thereof, and program thereof**

(57) The subject is to provide a method for alarming a decrease in tire air-pressure that can improve the precision of the reduced pressure judgment and a device thereof and a program for judging the decrease in tire air-pressure.

Means for solution is a method for alarming a decrease in tire air-pressure that informs the decrease in tire air-pressure based on the rotational speed obtained from tires loaded on a four-wheeled vehicle, a device thereof and a program thereof, wherein the influence of turning and the influence of acceleration to a lateral direction that are the correction factors of the judged value of the decrease in tire air-pressure are excluded.

FIG. 2

**Description**

The present invention relates to a method for alarming a decrease in tire air-pressure and a device thereof, and a program thereof. More specifically, the present invention relates to a method for alarming a decrease in tire air-pressure that informs a decrease in tire air-pressure based on rotational speed obtained from tires loaded on a four-wheeled vehicle, whereby the influence of a turning radius and acceleration to a lateral direction being the correction factors of the judged value of a decrease in tire air-pressure, a device thereof and a program thereof.

A detection device of a decrease in tire air-pressure has utilized a principle that when a tire air-pressure is decreased, an outer diameter (dynamic load radius) is reduced than a tire of normal inner pressure (normal air pressure); wheel speed is increased in comparison with other normal tires. For example, a method of the relative difference of the wheel speed of tires uses

$$DEL = \{(FL + FR)/2 - (RL + RR)/2\} \div \{(FL + FR + RL + RR)/4\} \times 100 \ (\%)$$

$$(1)$$

as a judged value (For example, refer to Japanese Unexamined Patent Publication No.63-305011)

Wherein FL + FR + RL + RR are the wheel speeds of a front left tire, a front right tire, a rear left tire and a rear right tire, respectively.

Further, as a detection device of a decrease in tire air-pressure, there is a device of comparing the wheel speeds of respective tires with the vehicle speed that can be measured from GPS (Global Positioning System) and time and judging a decrease in tire air-pressure (Japanese Unexamined Patent Publication No.2003-146037).

When the wheel speeds of respective tires are referred to as FL (front left), FR (front right), RL (rear left) and RR (rear right), the judged value is going to carry out a judged of a decrease in tire air-pressure by the combination of the result of the formula of cases 1 and 2, (Japanese Unexamined Patent Publication No.2005-53263).

Case 1)

$$DEL \ 1\_R = \{(FL + RR) - (FR + RL)\} \div (FL + FR + RL + RR) * 200 \ (\%)$$

$$DEL \ 2\_R = \{(FL + FR) - (RR + RL)\} \div (FL + FR + RL + RR) * 200 \ (\%)$$

$$DEL \ 3\_R = \{(FL + RL) - (FR + RR)\} \div (FL + FR + RL + RR) * 200 \ (\%)$$

Case 2)

$$DEL \ 1\_R = [\{(FL + RR) \ / \ (FR + RL)\} - 1]$$

$$* 100 \ (\%)$$

$$DEL \ 2\_R = [\{(FL + FR) \ / \ (RL + RR)\} - 1]$$

$$* 100 \ (\%)$$

$$DEL \ 3\_R = [\{(FL + RL) \ / \ (FR + RR)\} - 1]$$

$$* 100 \ (\%)$$

The following can be grasped from the relation of codes of DEL 1_R, DEL 2_R and DEL 3_R.

Table 1

|  | DEL1_R | DEL2_R | DEL3_R |
|---|---|---|---|
| Reduced pressure of FR wheel | - | + | - |
| Reduced pressure of FL wheel | + | + | + |
| Reduced pressure of RR wheel | + | - | - |
| Reduced pressure of RL wheel | - | - | + |

Which tire air-pressure decreased is judged by the combination of the above-mentioned judged value.

For example, when DEL 1_R is negative, DEL 2_R is positive and DEL 3_R is negative, it is grasped that the air-pressure of the FR wheel is decreased.

However, since the above-mentioned judgment formula DEL 3_R compares the rotational angular velocities of left and right wheels, they are fluctuated greatly by the influence of turning; therefore a judgment of a decrease in tire air-pressure cannot be occasionally carried out accurately. Further, it has been known that the dynamic load radius of tire is changed depending on the air pressure of tire and load size applied to a tire. When a vehicle turns, load is moved to the outside of the turning. Accordingly, when acceleration to a lateral direction is large, the quantity of load moving to the turning outside is also enlarged. If correction is not carried out, the accurate judgment of a decrease in tire air-pressure cannot be carried out and it is occasionally judged as a decrease in tire air-pressure in spite of normal inner pressure.

Consequently, it is difficult to improve the precision of a judgment of a decrease in tire air-pressure only by the comparison of the rotational angular velocities of respective tires and the comparison of vehicle speed with the rotational angular velocities.

Considering the above-mentioned circumstances, it is the purpose of the present invention to provide a detection method of a decrease in tire air-pressure that can improve the precision of the judgment of the decrease in tire air-pressure and a device thereof and a program thereof.

FIG. 1 is a block diagram showing the device for alarming a decrease in tire air-pressure related to one Embodiment of the present invention.

FIG.2 is a block diagram showing the electrical constitution of the device for alarming a decrease in tire air-pressure of FIG.1.

FIG.3 is one example of the flow chart of the present Embodiment.

FIG.4 is one example of the flow chart of the present Embodiment.

FIG.5 is a diagram showing the difference of judgment values depending on the presence or absence of turning correction.

The method for alarming a decrease in tire air-pressure of the present invention is a method that detects the decrease in tire air-pressure based on the rotational speed obtained from tires loaded on a four-wheeled vehicle, comprising a step of determining rotational speed obtained from respective tires, a step of calculating the first judged value comparing the rotational speed of a pair of tires on 2 pairs of orthogonal lines, the second judgment value comparing the rotational speed of front wheels and rear wheels and the third judged value comparing the rotational speed of right wheels and left wheels after correcting influence caused by the turning of a vehicle, a step of memorizing the rotational speed, the first, second and third judged values, and a step of judging the decrease in tire air-pressure based on judgment condition by every judged value of the first, second and third judged values that are set for each of tires.

Further, the method for alarming a decrease in tire air-pressure that detects the decrease in tire air-pressure based on the rotational speed obtained from tires loaded on a four-wheeled vehicle, comprising a step of determining rotational speed obtained from respective tires, a step of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the acceleration to a lateral direction and the load movement caused by the acceleration to a lateral direction, a step of memorizing the rotational speed, the first, second and third judged values, and a step of judging the decrease in tire air-pressure based on judgment condition by every judged value of the first, second and third judged values that are set for each of tires.

Further, the method for alarming a decrease in tire air-pressure that detects the decrease in tire air-pressure based on the rotational speed obtained from tires loaded on a four-wheeled vehicle, comprising a step of determining rotational speed obtained from respective tires, a step of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting the influence caused by the turning of a vehicle and the influence caused by an acceleration to a lateral direction and the load movement caused by the acceleration to a lateral direction, a step of memorizing the rotational speed, the first, second and third judged values, and a step of judging the decrease in tire air-pressure based on judgment condition by every judged value of the first, second and third judged values that are set for each of tires.

Further, it is preferable that influence caused by the load movement caused by the acceleration to a lateral direction is determined by a preliminary running. Hereat, the preliminary running is, for example, the running carried out for 1 min within a range that the acceleration to a lateral direction (lateral G) is |0.05 G | < lateral G < | 0.2 G| at normal inner pressure.

Further, it is preferable that influence caused by the load movement caused by the acceleration to a lateral direction is determined by a initial running after loading tires. Hereat, the initial running is, for example, the running is carried out for 1 min within a range that the lateral G is |10.05 G| < lateral G < |0.2 G| at normal inner pressure.

Further, a device for alarming a decrease in tire air-pressure that detects the decrease in tire air-pressure based on the rotational speed obtained from tires loaded on a four-wheeled vehicle, equipped with a means of detecting rotational speed obtained from respective tires, a judged value calculation means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning of a vehicle, a means of memorizing the rotational speed, the first, second and third judged values, and a judgment means of judging the decrease in tire air-pressure based on judgment condition by every judged value of the first, second and third judged values that are set for each of tires.

Further, a device for alarming the decrease in tire air-pressure that detects the decrease in tire air-pressure based on the rotational speed obtained from tires loaded on a four-wheeled vehicle, equipped with a means of detecting rotational speed obtained from respective tires, a means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by an acceleration to a lateral direction and the load movement caused by the acceleration to a lateral direction, a means of memorizing the rotational speed, the first, second and third judged values, and a means of judging the decrease in tire air-pressure based on judgment condition by every judged value of the first, second and third judged values that are set for each of tires.

A device for alarming a decrease in tire air-pressure that detects the decrease in tire air-pressure based on the rotational speed obtained from tires loaded on a four-wheeled vehicle, equipped with a means of detecting rotational speed obtained from respective tires, a means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting the influence caused by the turning and the influence caused by acceleration to a lateral direction and the load movement caused by the acceleration to a lateral direction, a means of memorizing the rotational speed, the first, second and third judged values, and a means of judging the decrease in tire air-pressure from judgment condition by every judged value of the first, second and third judged values that are set for each of tires.

The program for judging the decrease in tire air-pressure that detects the decrease in tire air-pressure based on the rotational speed obtained from tires loaded on a four-wheeled vehicle, for letting a computer enforce a procedure of detecting rotational speed obtained from respective tires, a procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning, a procedure of memorizing the rotational speed, the first, second and third judged values, and a procedure of judging the decrease in tire air-pressure based on judgment condition by every judged value of the first, second and third judged values that are set for each of tires.

Further, a program for judging the decrease in tire air-pressure that detects the decrease in tire air-pressure based on the rotational speed obtained from tires loaded on a four-wheeled vehicle, for letting a computer enforce a procedure of detecting rotational speed obtained from respective tires, a procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting the influence caused by an acceleration to a lateral direction and the load movement caused by the acceleration to a lateral direction, a procedure of memorizing the rotational speed, the first, second and third judged values, and a procedure of judging the decrease in tire air-pressure based on judgment condition by every judged value of the first, second and third judged values that are set for each of tires.

Further, a program for judging the decrease in tire air-pressure that detects the decrease in tire air-pressure based on the rotational speed obtained from tires loaded on a four-wheeled vehicle, for letting a computer enforce a procedure of detecting rotational speed obtained from respective tires, a procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning and the influence caused by an acceleration to a lateral direction and the load movement caused by the acceleration to a lateral direction, a procedure of memorizing the rotational speed, the first, second and third judged values, and a procedure of judging the decrease in tire air-pressure based on judgment condition by every judged value of the first, second and third judged values that are set for each of tires.

According to the present invention, the accurate judgment can be carried out by correcting the judged value of the decrease in tire air-pressure by seasoning the influence of the turning radius and the acceleration to a lateral direction. Further, correction item more suitable for in-vehicle running can be determined by determining coefficient caused by the acceleration to a lateral direction by preliminary running; therefore the precision of the correction can be heightened.

Further, correction item dependent on tires loaded at that time can be determined by determining the correction item during the initial running and the precision of the correction can be heightened.

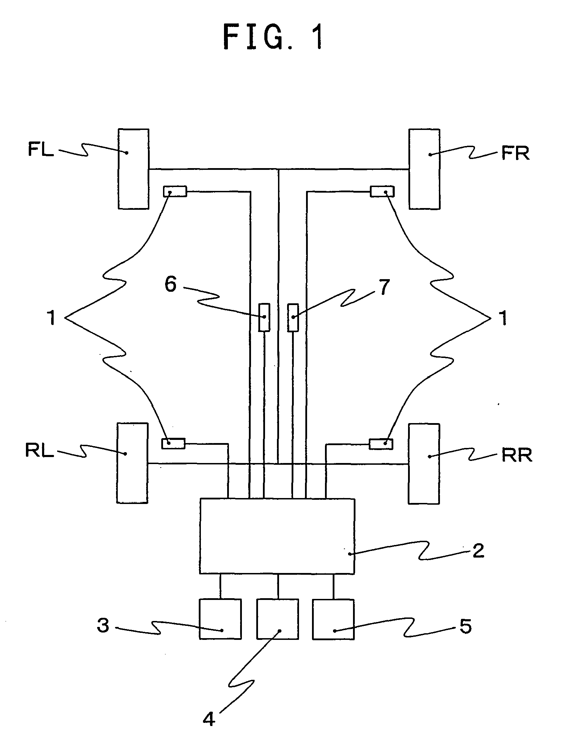

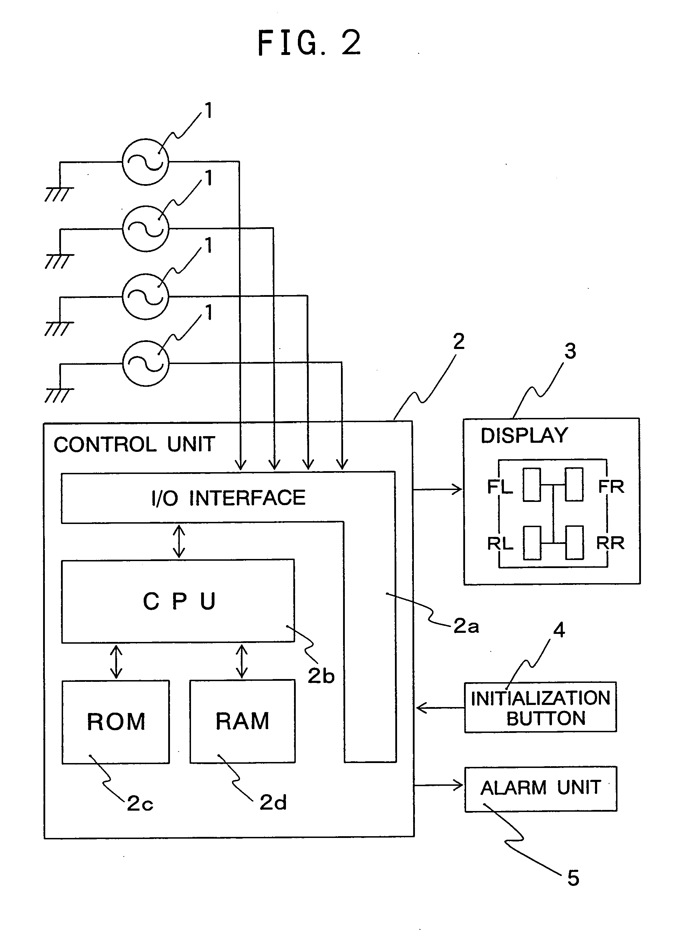

The method for alarming a decrease in tire air-pressure of the present invention is illustrated below based on the attached drawings. FIG. is a block diagram showing the device for alarming a decrease in tire air-pressure related to one Embodiment of the present invention. FIG.2 is a block diagram showing the electrical constitution of the device of FIG.1.

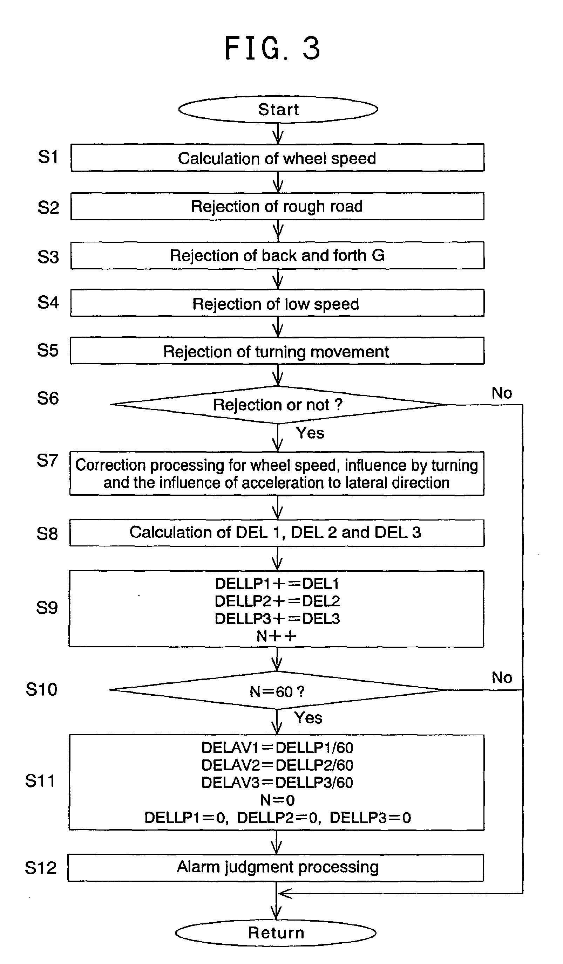

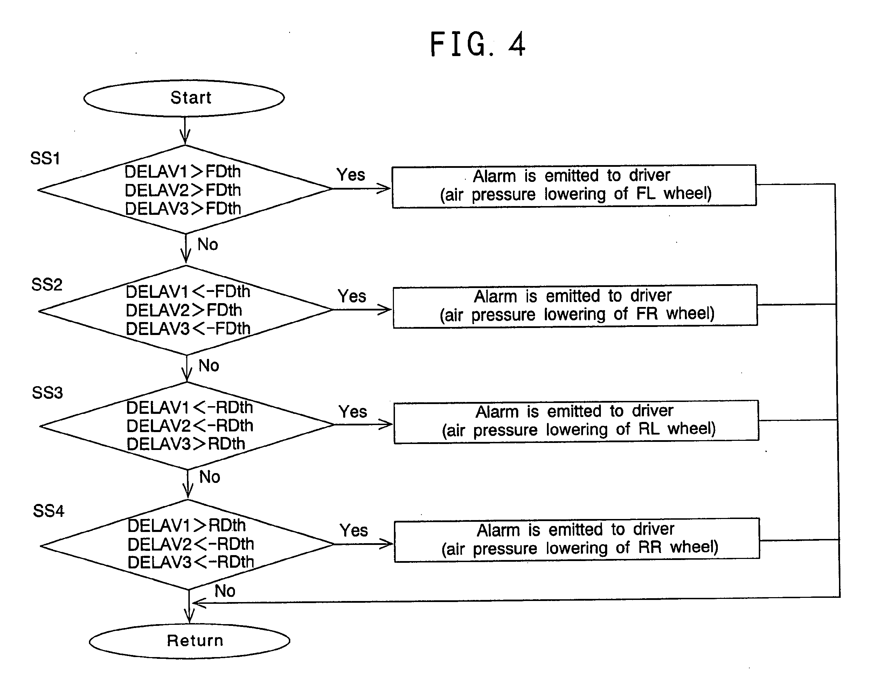

FIGS.3 and 4 are one example of the flow chart of the present invention.

As shown in FIG.1, the device for alarming a decrease in tire air-pressure of tires related to one Embodiment of the present invention detects whether the air pressures of 4 tires, FL, FR, RL and RR loaded on a four-wheeled vehicle are lowered or not, and is equipped with a usual means for detecting rotational speed that is respectively provided related to each of tires.

As the means 1 of detecting rotational speed, there can be used a wheel speed sensor for generating rotational pulse using an electromagnetic pickup and the like and measuring the rotational speed from the number of pulses, or an angular speed sensor including a device such as a dynamo for carrying out power generation utilizing rotation and measuring the rotational speed from the voltage. The output of the means 1 of detecting rotational speed is provided for a control unit 2 being the computer of ABS and the like. The control unit 2 is connected with a display 3 that is constituted by a liquid crystal display element, a plasma display element or CRT, an initialization switch 4 that can be operated by a driver and an alarm unit 5. Further, the vehicle is equipped with a yaw rate detection means 6 outputting signal corresponding to the yaw rate (a vehicle's rotation around its vertical axis) of the vehicle and a lateral G detection means 7 outputting signal corresponding to the acceleration to a lateral direction (lateral G) of the vehicle. The outputs of the yaw rate detection means 6 and the lateral G detection means 7 are provided for the control unit 2.

As shown in FIG.2, the control unit 2 is composed of an I/O interface 2a necessary for the delivery and receipt of signal with external equipments, a CPU 2b functioning as the processing center, a ROM 2c in which the control motion program of the CPU 2b is stored, and a RAM 2d in which data is temporarily written when the CPU 2b carries out control motion and the data written are read out.

Pulse signal (hereinafter, called as wheel speed pulse) corresponding to the rotational number of tires is outputted in the means 1 of detecting rotational speed. Further, CPU2b calculates the rotational speed of respective tires for a fixed sampling period $\Delta T$ (sec), for example, by every $\Delta T$ = 1 sec based on the rotational wheel pulse outputted from the means 1 of detecting rotational speed.

The procedures (1) to (11) of motion of the device for alarming a decrease in tire air-pressure related to the present Embodiment are illustrated below based on FIGS.3 to 4.

(1) The wheel speeds of four-wheeled tires FL, FR, RL and RR of a vehicle are calculated. (Step S1)

For example, after the rotational speed Fi of each of tires is calculated based on the wheel speed data at a fixed time of each of the wheels tires FL, FR, RL and RR of the vehicle that are obtained from sensors such as an ABS sensor, the wheel speed is calculated.

(2) Then, reject processing at rough road is carried out. (Step S2)

The rough road means state such as split $\mu$ road and pebble road, but in particular, when a vehicle runs on road on which only one side slides easily, the judged value exceeds a threshold even if air pressure is normal, and alarm is occasionally generated. The split $\mu$ road is road surface on which the frictional coefficients $\mu$ of left and right tires are different, and for example, right side is the road surface of asphalt and left side is the road surface of glass. Accordingly, when the variation quantity of difference of the slip rates of respective left and right of a vehicle that are determined from the wheel speed is large, the road is judged as rough road and data in the state is rejected.

(3) Then, the reject processing of acceleration to a back and forth direction is carried out (Step S3)

When the acceleration to a back and forth direction is large, tires run idle and the rotational speed Fi is fluctuated; therefore data in the state is rejected. For example, the acceleration to back and forth direction FRAi of each of tires is calculated by the following formula (1) when the wheel speed of each of tires calculated at sampling time before the sampling period $\Delta T$ (sec) is referred to as BVli:

$$FRAi = (V1i - BV1i) / (\Delta T \times 9.8) \tag{1}$$

Then, when it corresponds to the following formula (2), the rotational wheel speed Fi is rejected.

$$MAX\{|FRAi|\} > Ath \ (for \ example, \ Ath = 0.1 \ G : G = 9.8 \ (m/sec2)) \tag{2}$$

(4) Then, the reject processing at low speed is carried out. (Step S4)

Influence of the unevenness of road surface cannot be neglected at low speed of a vehicle and the rotational speed Fi is fluctuated; therefore data in the state is rejected. For example, when the vehicle speed V corresponds to the following formula (3), the rotational wheel speed Fi is rejected.

$$V < Vth \ (For \ example, \ Vth = 10 \ (km/h)) \tag{3}$$

(5) Then, the reject processing at turning movement is carried out. (Step S5)

When turning radius R at turning movement is little, tires skid and the rotational speed Fi is fluctuated; therefore data in the state is rejected. For example, when the turning radius R corresponds to the following formula (4), the rotational speed Fi is rejected.

$$R < Rth \ (For \ example, \ Rth = 30 \ (m)) \tag{4}$$

(6) Then, whether there are data to be rejected or not is judged. (Step S6)

When there are no data to be rejected (in case of no rejection), it proceeds to Step 7.

(7) Then, correction processing for the wheel speed, influence by turning and the influence of the acceleration to a lateral direction is carried out. (Step S7)

After carrying out initialization (processing determining the initial correction coefficients K1, K2 and K3) in order to exclude the influence of initial difference from the wheel speed, the initial correction shown in the following formulae (5) to (8) is carried out for the wheel speed and the wheel speeds V11, V21, V31 and V41 are calculated.

$$V11 = V1 \tag{5}$$

$$V12 = K1 \times V2 \tag{6}$$

$$V13 = K3 \times V3 \tag{7}$$

$$V14 = K2 \times K3 \times V4 \tag{8}$$

Hereat, the initial correction coefficients K1 is a coefficient for correcting the difference of dynamic load radius caused by initial difference between front left and right tires. The initial correction coefficients K2 is a coefficient for correcting the difference of dynamic load radius caused by initial difference between rear left and right tires. The initial correction coefficient K3 is a coefficient for correcting the difference of dynamic load radius caused by initial difference between a front left tire and a rear left tire.

Then, turning correction and the correction value caused by the influence of the acceleration to a lateral direction are calculated. When the turning radius is referred to as R and the tread width of a tire is referred to as W, influence by turning can be represented by the following formula:

$$(W \text{ of front axle} + W \text{ of rear axle}) / 2 / R \tag{9}$$

Hereat, the W of front axle is the tread width of a front wheel and the W of rear axle is the tread width of a rear wheel. Further, the turning radius can be calculated from the wheel speed ratio of an inner wheel and an outer wheel, and the turning radius can be also calculated from the yaw rate sensor value and the lateral G sensor value.

$$\text{Turning radius } R = \text{Speed} / \text{Yaw rate value} = (\text{Speed})2 / (9.8 \times \text{Lateral G value})$$

it is preferable that the acceleration to a lateral direction is detected by the detection means of the acceleration to a lateral direction provided in a vehicle, but it is not limited to this.

The correction value caused by influence caused by the acceleration to a lateral direction is related with the acceleration to a

lateral direction Lat G and item dependent on the acceleration to a lateral direction (one example, it corresponds to COR3).

The item dependent on the acceleration to a lateral direction can be determined from, for example, relation between [{(FL + RL) / (FR + RR)} - 1] * 100 (%)

and Lat G, using regression calculation, average method and the median method of statistical procedure.

(8) Then, judged values DEL 1, DEL 2 and DEL 3 are calculated. (Step S8)

One example of the formula correcting the influence of turning is cases 3 and 4 below.

Case 3)

DEL 1_R = {(FL + RR) – (FR + RL)} ÷ (FL + FR + RL + RR) * 200 (%)

DEL 2_R = {(FL + FR) – (RR + RL)} ÷ (FL + FR + RL + RR) * 200 (%)

DEL 3_R = {(FL + RL) – (FR + RR)} ÷ (FL + FR + RL + RR) * 200 (%) + (W

of front axle + W of rear axle) / 2 / R * 100 (%)


Case 4)

DEL 1_R = [{(FL + RR) / (FR + RL)} – 1]

  * 100 (%)

DEL 2_R = [{(FL + FR) / (RL + RR)} – 1]

  * 100 (%)

DEL 3_R = [{(FL + RL) / (FR + RR)} – 1] * 100 (%) + (W of front axle + W of rear axle) / 2 / R * 100

(%)


Further, one example of the formula also correcting the influence of the acceleration to a lateral direction is cases 5 and 6.


Case 5)

DEL 1_R = {(FL + RR) – (FR + RL)} ÷ (FL + FR + RL + RR) * 200 (%)

DEL 2_R = {(FL + FR) – (RR + RL)} ÷ (FL + FR + RL + RR) * 200 (%)

DEL 3_R = {(FL + RL) – (FR + RR)} ÷ (FL + FR + RL + RR) * 200 (%)–

COR 3 * Lat G (%)

Case 6)

$$DEL\ 1\_R = [\{(FL + RR) / (FR + RL)\} - 1]$$

$$* 100\ (\%)$$

$$DEL\ 2\_R = [\{(FL + FR) / (RL + RR)\} - 1]$$

$$* 100\ (\%)$$

$$DEL\ 3\_R = [\{(FL + RL) / (FR + RR)\} - 1]$$

$$* 100\ (\%) - COR\ 3 * Lat\ G\ (\%)$$

Further, one example correcting the influence of turning and the influence of the acceleration to a lateral direction is cases 7) and 8).

Case 7)

$$DEL\ 1\_R = \{(FL + RR) - (FR + RL)\} \div (FL + FR + RL + RR)\ * 200\ (\%)$$

$$DEL\ 2\_R = \{(FL + FR) - (RR + RL)\} \div (FL + FR + RL + RR)\ * 200\ (\%)$$

$$DEL\ 3\_R = \{(FL + RL) - (FR + RR)\} \div (FL + FR + RL + RR)\ * 200\ (\%) +$$

$$(W\ of\ front\ axle + W\ of\ rear\ axle) / 2 / R - COR\ 3 * Lat\ G\ (\%)$$

Case 8)

$$DEL\ 1\_R = [\{(FL + RR) / (FR + RL)\} - 1]$$

$$* 100\ (\%)$$

$$DEL\ 2\_R = [\{(FL + FR) / (RL + RR)\} - 1]$$

$$* 100\ (\%)$$

$$DEL\ 3\_R = [\{(FL + RL) / (FR + RR)\} - 1]$$

$$* 100\ (\%) + (W\ of\ front\ axle + W\ of\ rear\ axle) / 2 / R - COR$$

$$3 * Lat\ G\ (\%)$$

(9) Then, the judged values DEL 1, DEL 2 and DEL 3 increase cumulatively to a fixed times N (data number), for example, 60 times and the cumulative values (DELLP 1, DELLP 2 and DELLP 3) of respective judged values are determined. (Steps S9 and S10)

(10) Then, after accumulating the judged values by 60 times, average processing is carried out to determine respective average values (DELAV 1, DELAV 2 and DELAV 3). (Step 11) After calculation of average values, N, DELAV 1, DELAV 2 and DELAV 3 are respectively initialized to zero.

(11) Then, alarm judgment processing is carried out (Step 12)

The alarm judgment processing is carried out using 3 judged values for respective tires and respective judgment conditions as shown in the flow chart of FIG.4. Further, FD th and RD th are respectively the alarm threshold of the front wheels and threshold of rear wheels.

(I) With respect to the left front wheel tire (FL wheel), it is judged whether the average judged values DELAV 1, DELAV 2 and DELAV 3 satisfy respectively the judgment condition A1 of a decrease in tire air-pressure. (Step SS1).

Hereat, the judgment condition A1 of a decrease in tire air-pressure of front left wheel tire FL is as below.

$$\text{DELAV } 1 > \text{FD th } (> 0)$$

$$\text{DELAV } 2 > \text{FD th } (> 0)$$

$$\text{DELAV } 3 > \text{FD th } (> 0)$$

When all of 3 judgment conditions A1 are satisfied, alarm rings to a driver. To the contrary, when all of 3 judgment conditions A1 are not satisfied (when either of them is not satisfied, it is similar hereinafter), it proceeds to the step SS2.

(II) With respect to the right front wheel tire (FR wheel), it is judged whether the average judged values DELAV 1, DELAV 2 and DELAV 3 satisfy respectively the judgment condition A2 of a decrease in tire air-pressure. (Step SS2).

Hereat, the judgment condition A2 of a decrease in tire air-pressure of front right wheel tire FR is as below.

$$\text{DELAV } 1 < - \text{FD th } (< 0)$$

$$\text{DELAV } 2 > \text{FD th } (> 0)$$

$$\text{DELAV } 3 < - \text{FD th } (< 0)$$

When all of 3 judgment conditions A2 are satisfied, alarm rings to a driver. To the contrary, when all of 3 judgment conditions A2 are not satisfied, it proceeds to the step SS3.

(III) With respect to the left rear wheel tire (RL wheel), it is judged whether the average judged values DELAV 1, DELAV 2 and DELAV 3 satisfy respectively the judgment condition A3 of a decrease in tire air-pressure. (Step SS3).

The judgment condition A3 of a decrease in tire air-pressure of left rear wheel tire RL is as below.

$$\text{DELAV } 1 < - \text{RD th } (< 0)$$

$$DELAV\ 2 < -RD\ th\ (< 0)$$

$$DELAV\ 3 >\ RD\ th\ (> 0)$$

When all of 3 judgment conditions A3 are satisfied, alarm rings to a driver. To the contrary, when all of 3 judgment conditions A3 are not satisfied, it proceeds to the step SS4.

(IV) With respect to the right rear wheel tire (RR wheel), it is judged whether the average judged values DELAV 1, DELAV 2 and DELAV 3 satisfy respectively the judgment condition A4 of a decrease in tire air-pressure. (Step SS4).

The judgment condition A4 of a decrease in tire air-pressure of right rear wheel tire RR is as below.

$$DELAV\ 1 > RD\ th\ (> 0)$$

$$DELAV\ 2 < -RD\ th\ (< 0)$$

$$DELAV\ 3 < -RD\ th\ (< 0)$$

When all of 3 judgment conditions A4 are satisfied, alarm rings to a driver. To the contrary, when all of 3 judgment conditions A4 are not satisfied, it proceeds to the step SS 1.

EXAMPLE

In Example, (DEL 3_R = [{(FL + RL) / (FR + RR)} - 1] * 100 (%) + (W of front axle + W of rear axle) / 2 / R * 100 (%)) is used as it is, but the judgment formula is not limited to the fore-mentioned judgment formula and is not limited only to Example.

<Test method>

Vehicle: FR car
Two-seater
Normal inner pressure
Tire: 225/50R17
Tread width: W of front axle = W of rear axle = 1.5 m
Turning radius: R = 1000 m
Left turning

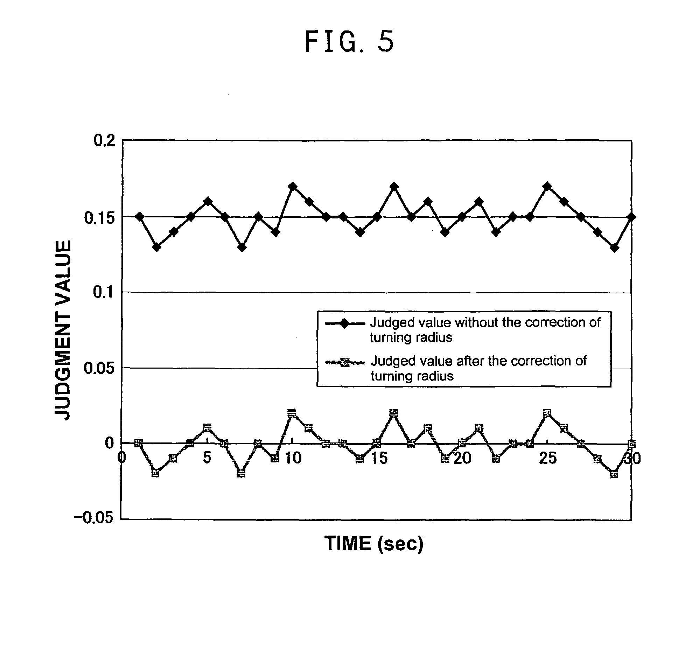

As shown in FIG. 5, it is grasped that a judged value was nearly zero in case of normal inner pressure irrespective of turning by carrying out the correction of turning radius of DEL 3. Since reduced pressure judgment was carried out at the judged value of about 0.1, it becomes error without the correction of turning radius, but the judged value becomes small by the correction and it was cleared that it did not become error.

While this invention has been described with reference to an illustrative embodiment, this description is not intended to be construed in a limiting sense. Various modifications of the illustrative embodiment, as well as other embodiments of the invention, will be apparent to persons skilled in the art upon reference to this description. It is, therefore, contemplated that the appended claims will cover any such modifications or embodiments as fall within the true scope of the invention.

**Claims**

1. A method for alarming a decrease in tire air-pressure that detects the decrease in tire air-pressure based on the rotational speed obtained from tires loaded on a four-wheeled vehicle, comprising a step of determining rotational speed obtained from respective tires, a step of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning of a vehicle,
a step of memorizing the rotational speed, the first, second and third judged values, and
a step of judging the decrease in tire air-pressure based on judgment condition by every judged value of the first, second and third judged values that are set for each of tires.

2. A method for alarming a decrease in tire air-pressure that detects the decrease in tire air-pressure based on the rotational speed obtained from tires loaded on a four-wheeled vehicle, comprising a step of determining rotational speed obtained from respective tires,
a step of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by acceleration to a lateral direction and load movement caused by the acceleration to a lateral direction,
a step of memorizing the rotational speed, the first, second and third judged values, and
a step of judging the decrease in tire air-pressure based on judgment condition by every judged value of the first, second and third judged values that are set for each of tires.

3. A method for alarming a decrease in tire air-pressure that detects the decrease in tire air-pressure based on the rotational speed obtained from tires loaded on a four-wheeled vehicle, comprising a step of determining rotational speed obtained from respective tires,
a step of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning of a vehicle and influence caused by acceleration to a lateral direction and load movement caused by the acceleration to a lateral direction,
a step of memorizing the rotational speed, the first, second and third judged values, and
a step of judging the decrease in tire air-pressure based on judgment condition by every judged value of the first, second and third judged values that are set for each of tires.

4. The method for alarming a decrease in tire air-pressure according to Claim 2 or 3, whereby influence by load movement caused by the acceleration to a lateral direction according to Claim 2 or 3 is determined by preliminary running.

5. The method for alarming a decrease in tire air-pressure according to Claim 2 or 3, whereby influence by load movement caused by the acceleration to a lateral direction according to Claim 2 or 3 is determined by preliminary running after loading tires.

6. A device for alarming a decrease in tire air-pressure that detects the decrease in tire air-pressure based on the rotational speed obtained from tires loaded on a four-wheeled vehicle, equipped with a means of detecting rotational speed obtained from respective tires,
a judged value calculation means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning,
a memory means of memorizing the rotational speed, the first, second and third judged values, and
a judgment means of judging the decrease in tire air-pressure from judgment condition by every judged value of the first, second and third judged values that are set for each of tires.

7. A device for alarming a decrease in tire air-pressure that detects the decrease in tire air-pressure based on the rotational speed obtained from tires loaded on a four-wheeled vehicle, equipped with a means of detecting rotational speed obtained from respective tires,
a judged value calculation means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by acceleration to a lateral direction and load movement caused by the acceleration to a lateral direction,
a memory means of memorizing the rotational speed, the first, second and third judged values, and
a judgment means of judging the decrease in tire air-pressure based on judgment condition by every judged value of the first, second and third judged values that are set for each of tires.

8. A device for alarming a decrease in tire air-pressure that detects the decrease in tire air-pressure based on the rotational speed obtained from tires loaded on a four-wheeled vehicle, equipped with a means of detecting rotational speed obtained from respective tires,
a judged value calculation means of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning and influence caused by acceleration to a lateral direction and load movement caused by the acceleration to a lateral direction,
a means of memorizing the rotational speed, the first, second and third judged values, and
a judgment means of judging the decrease in tire air-pressure from judgment condition by every judged value of the first, second and third judged values that are set for each of tires.

9. A program for judging a decrease in tire air-pressure that detects a decrease in tire air-pressure based on the rotational speed obtained from tires loaded on a four-wheeled vehicle, for letting a computer enforce a procedure of detecting rotational speed obtained from respective tires,
a judged value calculation procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning,
a procedure of memorizing the rotational speed, the first, second and third judged values, and
a judgment procedure of judging the decrease in tire air-pressure based on judgment condition by every judged value of the first, second and third judged values that are set for each of tires.

10. A program for judging a decrease in tire air-pressure that detects the decrease in tire air-pressure based on the rotational speed obtained from tires loaded on a four-wheeled vehicle, for letting a computer enforce a procedure of detecting rotational speed obtained from respective tires,
a judged value calculation procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by acceleration to a lateral direction and load movement caused by the acceleration to a lateral direction,
a memory procedure of memorizing the rotational speed, the first, second and third judged values, and
a judgment procedure of judging the decrease in tire air-pressure based on judgment condition by every judged value of the first, second and third judged values that are set for each of tires.

11. A program for judging a decrease in tire air-pressure that detects the decrease in tire air-pressure based on the rotational speed obtained from tires loaded on a four-wheeled vehicle, for letting a computer enforce a procedure of detecting rotational speed obtained from respective tires,
a judged value calculation procedure of calculating the first judged value comparing the rotational speed of a pair of tires on 2 pairs of orthogonal lines, the second judged value comparing the rotational speed of front wheels and rear wheels and the third judged value comparing the rotational speed of right wheels and left wheels after correcting influence caused by the turning and influence caused by acceleration to a lateral direction and load movement caused by the acceleration to a lateral direction,
a memory procedure of memorizing the rotational speed, the first, second and third judged values, and
a judgment procedure of judging the decrease in tire air-pressure based on judgment condition by every judged value of the first, second and third judged values that are set for each of tires.

# FIG. 1

# FIG. 2

# FIG. 3

Start

S1 | Calculation of wheel speed

S2 | Rejection of rough road

S3 | Rejection of back and forth G

S4 | Rejection of low speed

S5 | Rejection of turning movement

S6 | Rejection or not ? — No

Yes

S7 | Correction processing for wheel speed, influence by turning and the influence of acceleration to lateral direction

S8 | Calculation of DEL 1, DEL 2 and DEL 3

S9 |
DELLP1+=DEL1
DELLP2+=DEL2
DELLP3+=DEL3
N++

S10 | N=60 ? — No

Yes

S11 |
DELAV1=DELLP1/60
DELAV2=DELLP2/60
DELAV3=DELLP3/60
N=0
DELLP1=0, DELLP2=0, DELLP3=0

S12 | Alarm judgment processing

Return

# FIG. 4

Start

SS1  DELAV1＞FDth
     DELAV2＞FDth          Yes →  Alarm is emitted to driver
     DELAV3＞FDth                  (air pressure lowering of FL wheel)

     ↓ No

SS2  DELAV1＜-FDth
     DELAV2＞FDth          Yes →  Alarm is emitted to driver
     DELAV3＜-FDth                 (air pressure lowering of FR wheel)

     ↓ No

SS3  DELAV1＜-RDth
     DELAV2＜-RDth         Yes →  Alarm is emitted to driver
     DELAV3＞RDth                  (air pressure lowering of RL wheel)

     ↓ No

SS4  DELAV1＞RDth
     DELAV2＜-RDth         Yes →  Alarm is emitted to driver
     DELAV3＜-RDth                 (air pressure lowering of RR wheel)

     ↓ No

Return

EP 1 974 962 A2

# FIG. 5

**EP 1 974 962 A2**

REFERENCES CITED IN THE DESCRIPTION

**Patent documents cited in the description**

- JP 63305011 A
- JP 2003146037 A
- JP 2005053263 A